(19) **Europäisches Patentamt / European Patent Office / Office européen des brevets**

(11) **EP 1 388 221 B1**

(12) ## EUROPÄISCHE PATENTSCHRIFT

(45) Veröffentlichungstag und Bekanntmachung des Hinweises auf die Patenterteilung:
**04.07.2007 Patentblatt 2007/27**

(21) Anmeldenummer: **02729890.0**

(22) Anmeldetag: **15.05.2002**

(51) Int Cl.:
**H04B 7/06** *(2006.01)*    **H04B 7/02** *(2006.01)*

(86) Internationale Anmeldenummer:
**PCT/DE2002/001746**

(87) Internationale Veröffentlichungsnummer:
**WO 2002/095981 (28.11.2002 Gazette 2002/48)**

(54) **VERFAHREN ZUM STEUERN DER STRAHLFORMUNG IN EINEM MOBILFUNK-KOMMUNIKATIONSSYSTEM UND BASISSTATION DAFÜR**

METHOD FOR CONTROLLING BEAM FORMATION IN A MOBILE RADIO COMMUNICATIONS SYSTEM AND A BASE STATION THEREFOR

PROCEDE PERMETTANT DE COMMANDER LA FORMATION DE FAISCEAUX DANS UN SYSTEME DE RADIOCOMMUNICATION MOBILE ET STATION DE BASE CORRESPONDANTE

(84) Benannte Vertragsstaaten:
**DE FR GB**

(30) Priorität: **18.05.2001 DE 10124397**

(43) Veröffentlichungstag der Anmeldung:
**11.02.2004 Patentblatt 2004/07**

(73) Patentinhaber: **SIEMENS AKTIENGESELLSCHAFT**
**80333 München (DE)**

(72) Erfinder:
• **LOBINGER, Andreas**
 **83714 Miesbach (DE)**
• **RAAF, Bernhard**
 **81475 München (DE)**
• **WIEDMANN, Ralf**
 **81369 München (DE)**
• **SEEGER, Alexander**
 **85622 Feldkirchen (DE)**

(56) Entgegenhaltungen:
**WO-A-00/72464**    **WO-A-99/56407**
**WO-A-99/59255**

• **SAMSUNG AND SEOUL NATIONAL UNIVERSITY: "Preliminary Version of Algorithm and Simulation Results for Tx Diversity with more than 2 Tx Antennas" TSG-RAN WORKING GROUP 1 MEETING #14, 4. - 7. Juli 2000, Seiten 1-4, XP002197993 Oulu, Finland**

**Beschreibung**

Die vorliegende Erfindung betrifft ein Verfahren zum Steuern der Strahlformung eines Downlink-Signals, das in einem Mobilfunk-Kommunikationssystem von Basisstationen einer ersten und einer zweiten Funkzelle zu einer Mobilstation ausgestrahlt wird, eine Basisstation sowie eine Anordnung mit zumindest zwei Basisstationen für ein Mobilfunk-Kommunikationssystem.

In Mobilfunk-Kommunikationssystemen wie z.B. dem UMTS-System werden zur Ausnutzung von räumlicher Diversität Basisstationen mit mehreren Antennen eingesetzt. Diese Antennen werden für die Datenübertragung zu einer Mobilstation mit jeweils unterschiedlichen Gewichtungsfaktoren gewichtet, d.h. ein an die Mobilstation zu übertragendes Downlink-Signal wird jeweils multipliziert mit dem der jeweiligen Antenne zugeordneten Gewichtungsfaktor auf diese gegeben. Die Gewichtungsfaktoren sind im allgemeinen komplexe Zahlen, bestehend aus einer Betrags- und einer Phasenkomponente. Dadurch wird an der Basisstation für jede Mobilfunkstation in einer Zelle eine Abstrahlungskeule in Richtung des Aufenthaltsortes der jeweiligen Mobilstation erzeugt (Strahlformung, Beamforming). Die Gewichtungsfaktoren der einzelnen Antennen werden in einem Gewichtungsvektor zusammengefasst.

In sogenannten "Closed-Loop Transmit Diversity"-Verfahren wird der erforderliche Gewichtungsvektor an der Mobilstation geschätzt, quantisiert und über den Uplink Dedicated Physical Control Channel zur Basisstation übertragen und dort zur Strahlformung verwendet.

Aus der internationalen Patentanmeldung WO 99/56407 A2 ist ein Verfahren bekannt, bei dem eine Basisstation mit mehreren Antennen über jede der Antennen ein Signal aussendet und Mobilstationen basierend auf dem empfangenen Signal jeweils individuell die zu verwendende Antenne der Basisstation auswählen.

Die internationale Patentanmeldung WO 00/72464 A1 beschreibt ein Verfahren, bei dem die Übertragung von "feedback information" von einer Mobilstation zu einer Basisstation mit mehreren Antennen zur Festlegung eines Gewichtungsvektors zur Erhöhung der Übertragungskapazität unter Verwendung eines Multiplex-Verfahrens erfolgt.

Bewegt sich allgemein eine Mobilstation von einer ersten Funkzelle des Mobilfunk-Kommunikationssystems in eine zweite, so muss eine von ihr unterhaltene Kommunikationsverbindung von der Basisstation der ersten Funkzelle auf die der zweiten umgeschaltet werden. Dieser Vorgang wird als Handover bezeichnet.

Im Falle des sogenannten Soft Handover gibt es einen Zwischenzustand, in dem gleiche Nutzdaten an die Mobilstation im Downlink von den Basisstationen von zwei oder mehr Funkzellen gesendet werden. in der Literatur wird zwischen einem Soft Handover im engeren Sinne, bei dem die Funkzellen jeweils unterschiedlichen Basisstationen entsprechen, und einem Softer Handover unterschieden, bei dem die Funkzellen unterschiedlichen Sektoren einer Basisstation entsprechen. Wenn im folgenden von Soft Handover gesprochen wird, so sind stets beide Alternativen gemeint.

Herkömmlicherweise wird bei einem Soft Handover einer Mobilstation zwischen zwei Basisstationen, die räumliche Diversität einsetzen, ein gemeinsamer Gewichtungsvektor für beide Basisstationen ausgewählt. Dieser gemeinsame Gewichtungsvektor wird derart bestimmt, dass er die an der Mobilstation ankommende Leistung aller am Soft Handover beteiligten Funkzellen maximiert. D.h. es wird ein Gewichtungsvektor W gesucht, für den der Ausdruck

$$P = W^H (H_1^{\ H} H_1 + H_2^{\ H} H_2 + ...)W$$

maximal wird, wobei $H_i^H H_i$ die Kovarianzmatrix des Übertragungskanals der i-ten am Handover beteiligten Basisstation zur Mobilstation ist. Daraus folgt, dass alle am Handover beteiligten Basisstationen den gleichen Gewichtungsvektor verwenden, d.h. die gleiche räumliche Abstrahlungscharakteristik haben.

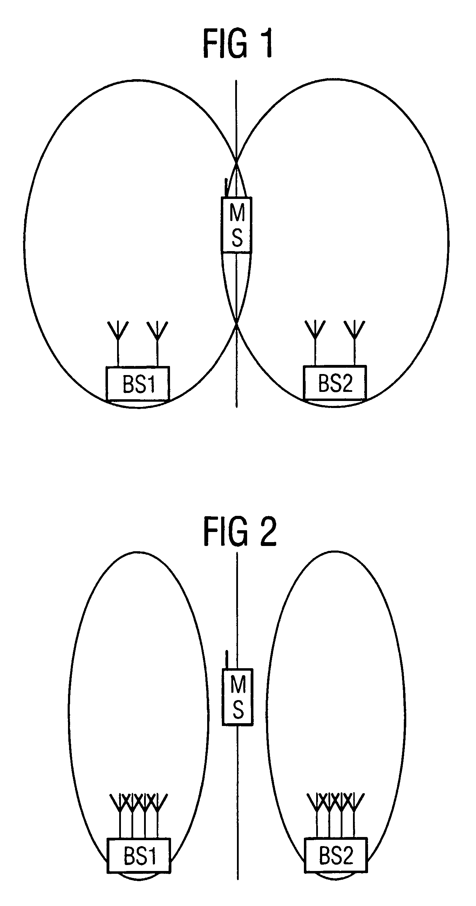

Fig. 1 veranschaulicht diese Situation am Beispiel der Abstrahlungskeulen zweier Basisstation BS1, BS2 und einer Mobilstation MS, die sich in einem Grenzbereich zwischen den Funkzellen der zwei Basisstationen befindet. Da beide Basisstationen BS1, BS2 den gleichen Gewichtungsvektor anwenden, sind ihre Abstrahlungskeulen gleich orientiert, und die Mobilstation MS befindet sich jeweils in einem Randbereich von beiden Keulen und hat daher von beiden Basisstationen keinen optimalen Empfang.

Um die Zahl von Mobilstationen, die in einer Funkzelle gleichzeitig versorgt werden können, zu erhöhen und gleichzeitig Störungen in Nachbarzellen gering zu halten, ist es an sich wünschenswert, die Zahl der Antennen an der Basisstation zu erhöhen, um so stärker gerichtete Abstrahlungskeulen erzeugen zu können. Wie Fig. 2 zeigt, bringt dies die Gefahr mit sich, dass ein herkömmlicher Soft Handover nicht mehr durchführbar ist, da die Abstrahlungskeulen beider Antennen im Grenzgebiet der Zellen nicht mehr überlappen. Die Mobilstation MS empfängt hier keines der Downlink-Signale der Basisstationen BS1, BS2 mit ausreichender Qualität.

Aufgabe der Erfindung ist, ein Verfahren zum Steuern der Strahlformung eines Downlink-Signals anzugeben, das eine Downlink-Signalversorgung einer Mobilstation, die mit Basisstationen von wenigstens zwei Funkzellen gleichzeitig kommuniziert, von wenigstens zweien dieser Basisstationen aus gleichzeitig mit optimaler Qualität ermöglicht, und eine zur Durchführung eines solchen Verfahrens geeignete Basisstation anzugeben.

Die Aufgabe wird gelöst durch ein Verfahren gemäß Patentanspruch 1, eine Basisstation gemäß Patentanspruch 18 sowie eine Anordnung gemäß Patentanspruch 19.

Das Verfahren hat die herkömmlichen Schritte des Festlegens eines Satzes von Gewichtungsvektoren, wobei jedem Gewichtungsvektor ein Codewort zugeordnet ist, an der Mobilstation und den Basisstationen der ersten und der zweiten Funkzelle, des Auswählens eines optimalen Gewichtungsvektors unter den Vektoren dieses Satzes an der Mobilstation und des Übertragens des dem optimalen Gewichtungsvektor zugeordneten Codeworts an die Basisstationen, und des mit dem dem Codewort zugeordneten Gewichtungsvektor gewichteten Ausstrahlens des Downlink-Signals an jede Basisstation.

Die Besonderheit des Verfahrens beruht darin, dass an den Basisstationen der ersten und der zweiten Funkzelle die Gewichtungsvektoren den Codewörtern in unterschiedlicher Weise zugeordnet werden, so dass diese Basisstationen bei Empfang eines gleichen Codeworts das Downlink-Signal mit unterschiedlichen Gewichtungsvektoren gewichten. Wenn nämlich die Mobilstation ein Codewort überträgt, das einen Gewichtungsvektor codiert, der, wenn er von der ersten Basisstation verwendet wird, der Mobilstation einen optimalen Empfang des Downlink-Signals der ersten Basisstation ermöglicht, so ist dieser Gewichtungsvektor, wenn er von der zweiten Basisstation verwendet wird, die sich an einem anderen Ort befindet, mit Sicherheit nicht optimal, so dass jeder andere Gewichtungsvektor des festgelegten Satzes Aussicht hat, besser zu sein.

Vorzugsweise wird besagter Satz der Gewichtungsvektoren so festgelegt, dass er jeweils wenigstens einen Gewichtungsvektor, der einem Übertragungsweg der ersten Funkzelle entspricht, und wenigstens einen Vektor enthält, der einem Übertragungsweg der zweiten Funkzelle entspricht. Indem diesen zwei Vektoren an den Basisstationen der ersten Funkzelle bzw. der zweiten Funkzelle jeweils ein gleiches Codewort zugeordnet wird, ist gewährleistet, dass durch Übertragung eines einzigen Codewortes an beiden Basisstationen jeweils spezifisch für diese Basisstationen geeignete Gewichtungsvektoren ausgewählt werden können.

Wenn oben und im folgenden meist nur von zwei Funkzellen oder Basisstationen die Rede ist, so ist dies nicht dahingehend zu verstehen, dass nicht auch mehr als zwei Basisstationen gleichzeitig das Downlink-Signal gleichzeitig ausstrahlen könnten. Wenn das Downlink-Signal auch von einer Basisstation wenigstens einer dritten Funkzelle ausgestrahlt wird, so sollte der Satz der Gewichtungsvektoren wenigstens einen Gewichtungsvektor umfassen, der einem Übertragungsweg der wenigstens einen dritten Funkzelle entspricht und diesem Gewichtungsvektor an der Basisstation der zugeordneten dritten Funkzelle das gleiche Codewort zugeordnet werden. So ist das erfindungsgemäße Verfahren auf eine im Prinzip beliebige Zahl von Funkzellen bzw. Basisstationen erweiterbar.

Zum Festlegen des Satzes der Gewichtungsvektoren werden vorzugsweise Gewichtungsvektoren an der Mobilstation gemessen und in einer Reihenfolge an die Basisstation übertragen, wobei eine erste Gruppe von Plätzen dieser Reihenfolge der Übertragung von Gewichtungsvektoren vorbehalten ist, die einem übertragungsweg der ersten Funkzelle entsprechen, und eine zweite Gruppe von Plätzen der Übertragung von Gewichtungsvektoren vorbehalten ist, die einem Übertragungsweg der zweiten Funkzelle entsprechen. So ist jede Basisstation bei Empfang des Satzes von Vektoren von der Teilnehmerstation in der Lage, anhand des Platzes, den ein Vektor in der Reihenfolge einnimmt, zu erkennen, ob es sich um einen am Downlink-Signal dieser Basisstation gemessenen, spezifisch zur Verwendung durch diese Basisstation bestimmten Vektor oder einen einer anderen Station zugeordneten Vektor handelt.

Selbstverständlich kann es auch dritte und weitere Gruppen von Plätzen in der Reihenfolge geben, wenn vorgesehen ist, dass die Teilnehmerstation mit mehr als zwei Basisstationen gleichzeitig kommuniziert.

Insbesondere wenn die Zahl der Gruppen variabel ist, insbesondere wenn die Zahl der an einem Soft Handover beteiligten Basisstationen je nach Empfangsbedingungen variabel ist, ist es zweckmäßig, dass die Teilnehmerstation eine Angabe über die Zahl der Gruppen an die Basisstationen überträgt, so dass die Basisstationen anhand dieser Angabe folgern können, welche Plätze der Reihenfolge zu welcher Gruppe gehören.

Vorzugsweise folgen in der Reihenfolge die Plätze der verschiedenen Gruppen zyklisch aufeinander. D.h. im Falle von zwei Gruppen umfasst eine Gruppe geradzahlige und die andere ungeradzahlige Plätze, im Falle von drei Gruppen umfasst eine die Plätze 1, 4, ..., eine andere die Plätze 2, 5, .. usw..

Eine alternative Möglichkeit ist, dass die an der Mobilstation gemessenen Gewichtungsvektoren an die Basisstationen jeweils in Verbindung mit einem Indikator übertragen werden, der die Funkzelle des Übertragungsweges bezeichnet, dem der übertragene Gewichtungsvektor entspricht. So kann an jedem Platz der Reihenfolge ein an einem beliebigen Übertragungsweg gemessener Gewichtungsvektor übertragen werden. Insbesondere kann so jede Gruppe beliebige unterschiedliche Zahlen von Vektoren enthalten.

Die zwei Basisstationen wenden zweckmäßigerweise zwei verschiedene Vorschriften für die Zuordnung eines so übertragenen Gewichtungsvektors zu einem später von der Mobilstation übertragenen Codewort an.

Einer ersten Alternative zufolge sind diese Vorschriften so aufeinander abgestimmt, dass jedem Codewort in den zwei Vorschriften jeweils ein einem Übertragungsweg der ersten Funkzelle entsprechender Gewichtungsvektor und ein einem Übertragungsweg der zweiten Funkzelle entsprechender Gewichtungsvektor zugeordnet ist.

Die Zahl der auf Messungen an Übertragungswegen einer bestimmten Funkzelle zurückgehenden Vektoren in dem Satz der Gewichtungsvektoren kann für die einzelnen Funkzellen unterschiedlich sein, insbesondere kann sie für wenigstens eine Funkzelle größer als 1 sein und für wenigstens eine andere gleich 1. Daher ist es nach einer zweiten Alternative zweckmäßig, wenn die wenigstens eine Basisstation eine Vorschrift einsetzt, in der jedem Codewort ein anderer Gewichtungsvektor zugeordnet ist, und die wenigstens eine andere eine Vorschrift einsetzt, bei der jedem Codewort der gleiche Gewichtungsvektor zugeordnet ist. So kann die Teilnehmerstation durch Übertragen unterschiedlicher Codewörter bei der einen Basisstation Diversität nutzen, während gleichzeitig die andere stets den gleichen Gewichtungsvektor verwendet, der im allgemeinen dem besten dieser Station zur Verfügung stehenden Übertragungsweg entsprechen wird.

Eine andere vorteilhafte Möglichkeit ist, dass wenigstens eine der Basisstationen eine erste Vorschrift einsetzt, in der eine Mehrzahl von Codewörtern einem gleichen Gewichtungsvektor zugeordnet ist, und dass wenigstens eine andere Basisstation eine zweite Vorschrift einsetzt, in der dieser Mehrzahl von Codewörtern jeweils verschiedene Gewichtungsvektoren zugeordnet sind. Insbesondere können die Codewörter erste und zweite Bits umfassen, wobei die ersten Bits jeweils den von der einen Basisstation verwendeten Gewichtungsvektor und die zweiten Bits den von der zweiten Basisstation verwendeten Gewichtungsvektor spezifizieren. So kann die Teilnehmerstation an jeder der Basisstationen Diversität nutzen, wenn auch die Zahl an jeder Basisstation zur Auswahl stehenden Gewichtungsvektoren in diesem Fall kleiner sein kann als bei den zwei vorgenannten Alternativen.

Die Festlegung der Gewichtungsvektoren an der Mobilstation erfolgt vorzugsweise, indem für jede Basisstation eine Kovarianzmatrix berechnet wird und jeweils wenigstens ein Gewichtungsvektor unter den Eigenvektoren jeder Kovarianzmatrix ausgewählt wird. Dabei werden die ausgewählten Eigenvektoren im allgemeinen diejenigen sein, deren Eigenvektoren den höchsten Betrag aufweisen.

Wenn das oben beschriebene Verfahren zum Steuern der Strahlformung im Rahmen eines Soft Handover zwischen der ersten und der zweiten Funkzelle eingesetzt wird, so kann im einfachsten Falle der Satz von Gewichtungsvektoren lediglich zwei Vektoren umfassen, und es wird von den zwei zum Bezeichnen dieser Gewichtungsvektoren benötigten Codewörtern dasjenige Codewort an die Basisstationen übertragen, das an der Basisstation der ersten Funkzelle dem der ersten Funkzelle zugeordneten Gewichtungsvektor und an der Basisstation der zweiten Funkzelle dem der zweiten Funkzelle zugeordneten Gewichtungsvektor entspricht. Anschließend wird für die Dauer des Handover die Auswahl der von den Basisstationen verwendeten Gewichtungsvektoren zweckmäßigerweise nicht mehr verändert, denn die Übertragung des jeweils anderen Codeworts würde dazu führen, dass die Basisstation der ersten Funkzelle einen anhand des Downlink-Signals der zweiten Funkzelle festgelegten Gewichtungsvektor verwendet, und umgekehrt. Da nicht zu erwarten ist, dass dies zu einer Verbesserung des Empfangs führt, ist es zweckmäßig, wenn für die Dauer des Handovers eine Umschaltung der Gewichtungsvektoren an den Basisstationen unterbleibt.

Es kann vorgesehen werden, dass die Basisstation der zweiten Funkzelle nach Abschluss des Handovers die zweite Vorschrift für die Zuordnung der Gewichtungsvektoren zu den von der Mobilstation übertragenen Codewörtern beibehält. In einem solchen Fall wendet im Falle eines erneuten Handovers zu einer dritten Funkzelle deren Basisstation wiederum die erste Vorschrift an.

Eine alternative Möglichkeit ist, dass die Basisstation der Funkzelle nach Abschluss des Handovers auf die Verwendung der ersten Vorschrift übergeht. Diese Alternative ist einfacher zu implementieren, da eine Basisstation, die im Rahmen eines Handovers mit einer Mobilstation zu kommunizieren beginnt, dann in jedem Fall die zweite Vorschrift anwenden kann, ohne dass vorher geklärt werden muss, welche Vorschrift die jeweils andere Basisstation verwendet.

Eine zum Durchführen des Verfahrens geeignete Basisstation ist dadurch gekennzeichnet, dass sie eingerichtet ist, um selektiv jeweils eine von zwei oder mehr verschiedenen Vorschriften zum Auswählen des Gewichtungsvektors anhand des übertragenen Codewortes einzusetzen. Wenn nur zwei Stationen an einem Soft Handover beteiligt sind, genügen zwei Vorschriften, ist die Zahl der beteiligten Basisstationen größer, so ist auch eine entsprechend größere Zahl von Vorschriften erforderlich.

Weitere Merkmale der Erfindung ergeben sich aus der nachfolgenden Beschreibung von Ausführungsbeispielen mit Bezug auf die beigefügten Figuren. Es zeigen:

Fig. 1,　bereits behandelt, eine schematische Darstellung der Strahlformung in einem herkömmlichen Mobilfunk-Kommunikationssystem, deren Basisstationen jeweils zwei Antennen haben und ein Downlink-Signal in einen relativ breiten Raumwinkel abstrahlen;

Fig. 2,　bereits behandelt, eine Darstellung analog der der Fig. 1 eines Mobilfunk-Kommunikationssystems mit Basisstationen, die relativ stark gebündelte Abstrahlungscharakteristiken aufweisen;

Fig. 3　eine Darstellung, analog der der Fig. 1, eines Mobilfunk-Kommunikationssystems, in dem das erfindungsgemäße Verfahren eingesetzt wird;

Fig. 4　eine schematische Darstellung einer ersten Ausgestaltung der Übertragung von an einer Mobilstation gemessenen Gewichtungsvektoren von der Mobilstation an zwei Basisstationen und deren Verarbeitung in den Basisstationen;

Fig. 5 eine schematische Darstellung der Übertragung und Verarbeitung der Gewichtungsvektoren nach einer zweiten Ausgestaltung; und

Fig. 6 eine schematische Darstellung der Übertragung und Verarbeitung der Gewichtungsvektoren nach einer dritten Ausgestaltung.

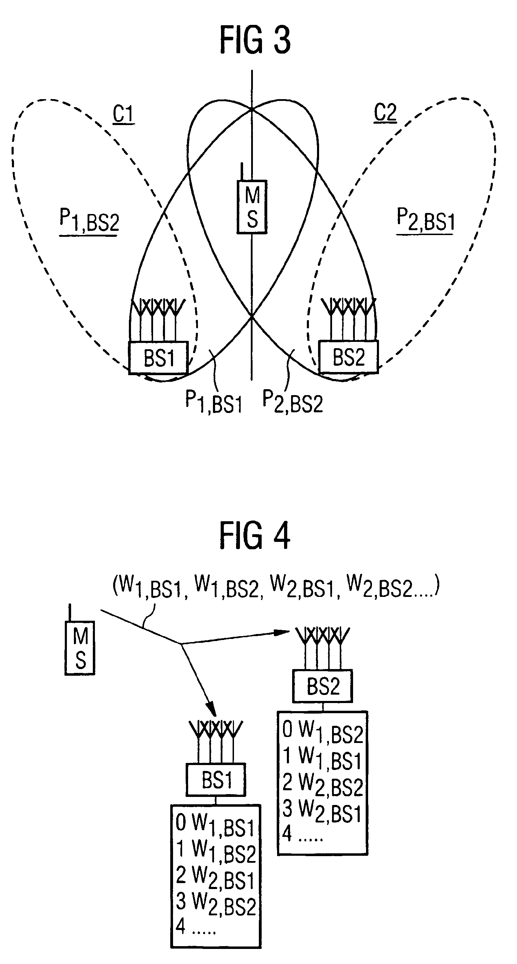

Fig. 3 zeigt eine Mobilstation MS an der Grenze zwischen zwei Funkzellen C1, C2 eines Mobilfunk-Kommunikationssystems. Die Funkzellen C1, C2 werden jeweils von Basisstationen BS1, BS2 versorgt, die untereinander über ein in der Fig. nicht dargestelltes, auch als Core Network bezeichnetes Datenübertragungsnetzwerk verbunden sind, über das sie Daten mit anderen Basisstationen des Funk-Kommunikationsystems oder einem an das Datenübertragungsnetzwerk angeschlossenen zweiten Fernmeldenetz austauschen oder auch gemeinsam gleiche, für dieselbe Mobilstation MS bestimmte Daten empfangen können.

Die zwei Basisstationen BS1, BS2 verwenden für die Downlink-Übertragung an die Mobilstationen in ihren jeweiligen Zellen C1, C2 unterschiedliche Scrambling Codes, die es der Mobilstation MS ermöglichen, bei einem Downlink-Signal, das sie empfängt, dessen Herkunft von der Basisstation BS1 oder BS2 zu erkennen.

Dies ermöglicht es der Mobilstation MS, die Übertragungskanäle zwischen ihr und den zwei Basisstationen BS1, BS2 jeweils einzeln abzuschätzen und für jede Basisstation einzeln eine Kovarianzmatrix $R_1$, $R_2$ aufzustellen. Die Kovarianzmatrizen werden über einen ausreichend langen Zeitraum gemittelt, so dass sie im wesentlichen unabhängig von Schwankungen der Empfangsbedingungen durch kurzfristige Interferenzerscheinungen sind. Eine von der Mobilstation MS durchgeführte Eigenvektoranalyse der gemittelten Kovarianzmatrizen liefert einen Satz von Eigenvektoren $W_{i,BSj}$, i=1,2, ...., M, wobei M die Zahl der Antennen der Basisstationen BS1, BS2 ist, j=1,2. Zu jeder Kovarianzmatrix wird der Eigenvektor mit dem größten Eigenwert ausgewählt, und die zwei so erhaltenen Eigenvektoren werden als Gewichtungsvektoren an die Basisstationen BS1, BS2 übertragen.

Die Übertragung der Gewichtungsvektoren findet in Zeitabständen von einigen Sekunden bis Minuten statt, da die Basisvektoren sich mit einer relativ geringen Geschwindigkeit ändern, die von der Bewegungsgeschwindigkeit der Mobilstation abhängt. Zwischen zwei Übertragungen von Basisvektoren überträgt die Mobilstation jeweils nur Codewörter, hier von 1 Bit Länge, die den Basisstationen angeben, welchen der zwei Gewichtungsvektoren sie zum Senden an die Mobilstation verwenden sollen.

Jede Basisstation BS1, BS2 verfügt nach der Übertragung der Gewichtungsvektoren somit über den gleichen Satz von zwei Gewichtungsvektoren, von denen einer anhand ihres eigenen Downlink-Signals ermittelt ist und der andere auf das Downlink-Signal der anderen Basisstation zurückgeht. Den zwei Basisvektoren entsprechen jeweils Abstrahlungscharakteristiken $P_{1,BS1}$, $P_{1,BS2}$, $P_{2,BS1}$ und $P_{2,BS2}$ der zwei Basisstationen BS1, BS2. Die Charakteristiken $P_{1,BS1}$, $P_{2,BS2}$, die jeweils der Verwendung eines Eigenvektors durch diejenige Basisstation, anhand von deren Signal er gemessen wurde, entsprechen, treffen die Mobilstation MS, die beiden anderen Charakteristiken sind offensichtlich für die Kommunikation mit der Mobilstation MS schlecht geeignet.

So lange sich eine Mobilstation im Kernbereich einer Zelle, z.B. der Zelle C1 befindet und ausschließlich mit deren Basisstation BS1 kommuniziert, gehen beide von der Mobilstation an die Basisstation BS1 übertragenen Gewichtungsvektoren auf Messungen am Downlink-Signal der Basisstation BS1 zurück. Hier kann die Mobilstation MS durch Übertragen eines Ein-Bit-Codeworts der Basisstation BS1 vorschreiben, welchen der zwei Gewichtungsvektoren sie in einem kommenden Zeitschlitz des Downlink-Signals verwenden soll. Zu diesem Zweck existiert eine Zuordnungsvorschrift zwischen Codewort und verwendetem Gewichtungsvektor, z.B. der Art, dass von zwei nacheinander an die Basisstation übertragenen Gewichtungsvektoren der Wert "0" des Codeworts den ersten und der Wert "1" den zweiten spezifiziert.

Eine solche Zuordnungsvorschrift sollte möglichst auch dann für die Basisstation BS1 fortgelten, wenn im Rahmen eines Handovers einer der zwei Gewichtungsvektoren, die von der Mobilstation periodisch an beide beteiligten Basisstationen übertragen werden, durch einen Gewichtungsvektor ersetzt wird, der anhand des Downlink-Signals der übernehmenden Basisstation BS2 gemessen ist.

Wenn die gleiche Zuordnungsvorschrift auch für die übernehmende Basisstation BS2 gälte, so hätte dies bei hier betrachtetem Beispiel die Folge, dass zu einem gegebenen Zeitpunkt die zwei Basisstationen entweder die Charakteristiken $P_{1,BS2}$ und $P_{2,BS2}$ oder $P_{1,BS1}$ und $P_{2,BS1}$ verwenden, mit der Folge, dass jeweils nur das Downlink-Signal einer Basisstation an der Teilnehmerstation MS empfangbar wäre. Um dies zu vermeiden, muss die übernehmende Basisstation BS2 eine andere Zuordnungsvorschrift anwenden, die bei dem hier betrachteten, elementaren Beispiel nur lauten kann, dass die Basisstation BS2 den zweitübertragenen Gewichtungsvektor verwendet, wenn das Rückkopplungswort den Wert "0" hat, und den erstübertragenen bei einem Rückkopplungswort "1" verwendet. Auf diese Weise wird erreicht, dass durch Übertragung eines gleichen Rückkopplungsworts an beide Basisstationen diese unterschiedliche Gewichtungsvektoren verwenden können.

Wenn man annimmt, dass die Mobilstation NS zunächst den für die abgebende Basisstation BS1 gemessenen Gewichtungsvektor und dann den für die übernehmende Basisstation BS2 gemessenen überträgt, bewirkt anschließend die Übertragung des Codeworts 0, dass die Basisstationen jeweils die den Abstrahlungscharakteristiken $P_{1,BS1}$, $P_{2,BS2}$ entsprechenden Gewichtungsvektoren einsetzen. Da die Übertragung des Codeworts "1" keine Verbesserung des Empfangs verspricht, wird während der gesamten Dauer des Soft Handover das gleiche Rückkopplungscodewort "0" übertragen.

Um sicherzustellen, dass die übernehmende Basisstation BS2 die richtige Zuordnungsvorschrift verwendet, genügt es, dass ihr in geeigneter Weise signalisiert wird, dass es sich bei der mit der Mobilstation MS aufzubauenden Verbindung um ein Handover und nicht um den Neuaufbau einer Verbindung handelt. Im Falle des Neuaufbaus einer Verbindung muss sie die gleiche, erste Zuordnungsvorschrift wie die Basisstation BS1 verwenden. Nach Abschluss des Handovers geht die Basisstation BS2 auch in der Kommunikation mit der Mobilstation MS zur Verwendung der ersten Zuordnungsvorschrift über. Dies geschieht im Dialog mit der Mobilstation MS, damit sich diese darauf einstellen kann und die an die Basisstation BS2 gesendenten Codewörter richtig auswählt. Ein zweckmäßiger Zeitpunkt für den Wechsel der Zuordnungsvorschrift ist z.B., wenn die Mobilstation MS nach dem Handover zum ersten Mal einen Satz aktualisierter Gewichtungsvektoren an die Basisstation BS2 überträgt. Diese Vorgehensweise ermöglicht später einen erneuten Soft Handover zu einer weiteren Basisstation mit exakt dem gleichen Verfahren wie oben beschrieben.

Alternativ besteht auch die Möglichkeit, dass die Basisstation BS2 während der gesamten Dauer ihrer Kommunikation mit der Mobilstation MS die zweite Zuordnungsvorschrift verwendet. In diesem Fall ist es allerdings erforderlich, dass im Rahmen des Handovers eine Information über die von der abgebenden Basisstation BS1 verwendete Zuordnungsvorschrift an die übernehmende Basisstation BS2 übermittelt wird, damit diese die von ihr verwendete Zuordnungsvorschrift korrekt auswählen kann. Wenn nämlich ein zweiter Handover von der Basisstation BS2 zu einer dritten Basisstation stattfinden sollte, so muss diese dritte Basisstation "wissen", dass BS2 die zweite Vorschrift verwendet, um ihrerseits wieder die erste wählen zu können.

Fig. 4 veranschaulicht ein Soft Handover in einem Mobilfunk-Kommunikationssystem, in dem mehr als zwei Gewichtungsvektoren von der Mobilstation MS gemessen und an mit ihr kommunizierende Basisstationen übertragen werden. Die Bestimmung der Gewichtungsvektoren erfolgt in der gleichen Weise wie oben beschrieben. Die Gewichtungsvektoren werden in einer festgelegten Reihenfolge an zwei an einem Soft Handover beteiligte Basisstationen BS1, BS2 übertragen, wobei jeweils ungeradzahlige Plätze 1, 3, ... der Reihenfolge der Übertragung von am Downlink-Signal der abgebenden Basisstation BS1 gemessenen Gewichtungsvektoren $W_{1,BS1}$, $W_{2,BS1}$, ... vorbehalten sind und am Downlink-Signal der übernehmenden Basisstation BS2 gemessene Gewichtungsvektoren $W_{1,BS2}$, $W_{2,BS2}$, ... an geradzahligen Plätzen 2, 4, ... übertragen werden. Die abgebende Basisstation BS1 speichert die empfangenen Gewichtungsvektoren in der Reihenfolge des Empfangs ab und ordnet ihnen in dieser Reihenfolge Codewörter mit den Zahlenwerten 0, 1, 2, ... zu. Die übernehmende Basisstation BS2 hingegen führt eine paarweise Vertauschung der empfangenen Gewichtungsvektoren durch, so dass die Codewörter 0, 1, 2, 3 jeweils Gewichtungsvektoren $W_{1,BS2}$, $W_{1,BS1}$, $W_{2,BS2}$, $W_{2,BS1}$ usw. entsprechen. Bei diesem System kann auch während des Soft Handovers eine - wenn auch eingeschränkte - räumliche Diversität benutzt werden; die Codewörter 0, 2, 4, ... entsprechen jeweils geeigneten Kombinationen von Gewichtungsvektoren in dem Sinne, dass jede Basisstation einen Gewichtungsvektor verwendet, der anhand ihres eigenen Downlink-Signals festgelegt worden ist.

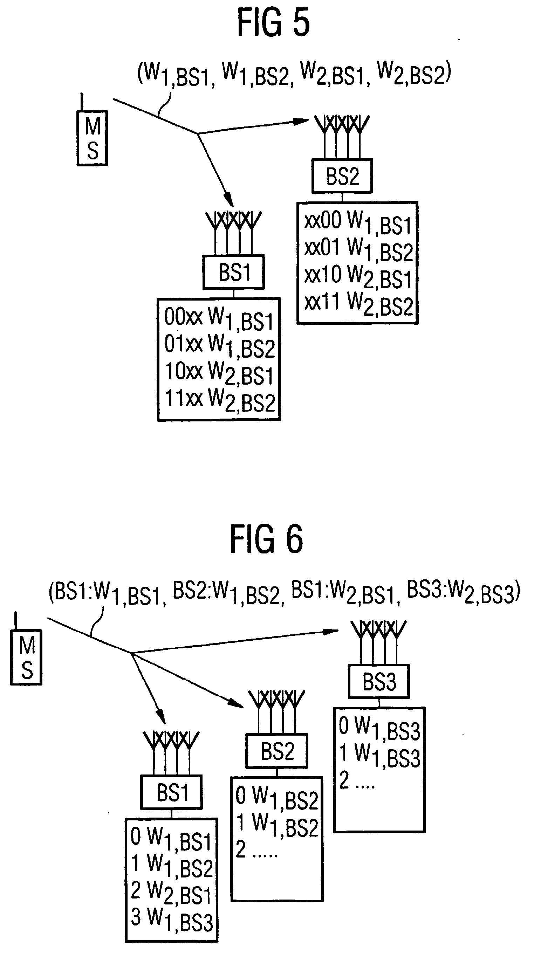

Fig. 5 zeigt eine Varinate der Übertragung und Verarbeitung der Gewichtungsvektoren. Bei dem hier betrachteten System werden jeweils vier Gewichtungsvektoren $W_{i,BSj}$ i=1, 2, j=1, 2 gemessen, die jeweils für die zwei besten Übertragungswege von jeder Basisstation BSj zur Teilnehmerstation MS stehen. Die Gewichtungsvektoren werden in der Reihenfolge ihrer Übertragung in vier Speicherplätze der Basisstationen geschrieben. Um die von den Basisstationen zu verwendenden Gewichtungsvektoren auszuwählen, überträgt die Teilnehmerstation MS jeweils Codewörter von vier Bit Länge. Von diesen wertet die abgebende Basisstation BS1 jeweils die ersten zwei aus; die letzten zwei werden ignoriert, was in der Fig. durch Buchstaben xx an den entsprechenden Stellen des Codeworts symbolisch dargestellt ist. Die übernehmende Basisstation BS 2 wertet umgekehrt nur die letzten zwei Bits des Codeworts aus und ignoriert die ersten beiden. D.h. es gibt insgesamt 16 Codewörter, von denen jeweils vier an einer der zwei Basisstationen BS1, BS2 den gleichen Gewichtungsvektor spezifizieren.

Fig. 6 zeigt eine Situation, in der eine Mobilstation von drei Basisstationen gleichzeitig ein Downlink-Signal empfängt. Sie überträgt anhand dieser Downlink-Signale ermittelte Gewichtungsvektoren jeweils zusammen mit einem Identifikator BS1:, BS2: oder BS3:, der für jeden Vektor die Basisstation angibt, anhand von deren Downlink-Signal er gemessen wurde. Die Gewichtungsvektoren (vier Stück in diesem Beispiel) werden von allen drei Basisstationen empfangen. Dabei erkennen die Basisstationen jeweils an der Zahl der auf sie bezogenen Identifikatoren, ob die Teilnehmerstation von ihnen Übertragung m,it wechselnden Gewichtungsvektoren verlangt oder nicht: die Basisstationen BS2, BS3, die jeweils nur einen auf sie bezogenen Gewichtungsvektor empfangen, tragen diesen Gewichtungsvektor $W_{1,BS2}$ bzw. $W_{1,BS3}$ wenigstens an den Plätzen 0 und 1 ihres Speichers ein. Die Basisstation BS1 hingegen, die mehr als einen auf sie bezogenen Gewichtungsvektoren empfangen hat, erkennt daran, dass sie mit Diversity arbeiten soll und trägt die zwei Vektoren $W_{1,BS1}$, $W_{2,BS1}$ an den Plätzen 0, 1 ihres Speichers ein. Mit Hilfe eines 1-Bit-Codeworts 0 oder 1 kann die Teilnehmertstation nun an der Basisstation BS1 unter den zwei Vektoren $W_{1,BS1}$, $W_{2,BS1}$ wählen, während die anderen Basisstationen stets den für sie als optimal ermittelten Vektor $W_{1,BS2}$ bzw. $W_{1,BS3}$ verwenden. Eine Wahlmöglichkeit zwischen Betrieb mit wechselnden Gewichtungsvektoren für eine Basisstation und Betrieb mit einem einzigen Gewichtungsvektor für eine andere Basisstation ist natürlich auch in einem Szenario mit nur zwei Basisstationen möglich, wenn eine der Stationen lediglich einen auf sie bezogenen Vektor empfängt und alle anderen Vektoren auf die andere Station bezogen sind, oder wenn zwei identische Gewichtungsvektoren an eine Basisstation übertragen werden.

**Patentansprüche**

1. Verfahren zum Steuern der Strahlformung eines Downlink-Signals, das in einem Mobilfunk-Kommunikationssystem von Basisstationen (BS1, BS2) einer ersten und einer zweiten Funkzelle (C1, C2) an eine Mobilstation (MS) ausgestrahlt wird, wobei die Basisstationen (BS1, BS2) mehrere Antennen aufweisen und eingerichtet sind, ein Downlink-Signal an die Mobilstation (MS) mit einem Gewichtungsvektor gewichtet auszustrahlen, mit den Schritten:

    - Festlegen eines Satzes von Gewichtungsvektoren, wobei jedem Gewichtungsvektor wenigstens ein Codewort zugeordnet ist, an der Mobilstation (MS) und den Basisstationen (BS1, BS2) der ersten und der zweiten Funkzelle (C1, C2),
    - Auswählen eines optimalen Gewichtungsvektors an der Mobilstation (MS) und Übertragen des dem optimalen Gewichtungsvektor zugeordneten Codeworts an die Basisstationen (BS1, BS2),
    - mit dem dem Codewort zugeordneten Gewichtungsvektor gewichtetes Ausstrahlen des Downlinksignals an jeder Basisstation (BS1, BS2),

    **dadurch gekennzeichnet, dass** an den Basisstationen (BS1, BS2) der ersten und der zweiten Funkzelle (C1, C2) die Gewichtungsvektoren den Codewörtern in unterschiedlicher Weise zugeordnet werden, so dass diese Basisstationen bei Empfang eines gleichen Codeworts das Downlink-Signal mit unterschiedlichen Gewichtungsvektoren gewichten, wobei die Gewichtungsvektoren zumindest teilweise derart definiert sind, dass sie ein gleichzeitiges Aussenden von Downlink-Signalen über mehrere Antennen einer Basisstation auslösen.

2. Verfahren nach Anspruch 1, **dadurch gekennzeichnet, dass** der Satz der Gewichtungsvektoren so festgelegt wird, dass er jeweils wenigstens einen einem Übertragungsweg der ersten Funkzelle (C1) entsprechenden Gewichtungsvektor ($W_{1,BS1}$, $W_{2,BS1}$, ...) und einen einem Übertragungsweg der zweiten Funkzelle (C2) entsprechenden Gewichtungsvektor ($W_{1,BS2}$, $W_{2,BS2}$, ...) enthält, und dass dem der ersten Funkzelle (C1) zugeordneten Gewichtungsvektor ($W_{1,BS1}$, $W_{2,BS1}$, ...) an der Basisstation (BS1) der ersten Funkzelle (C1) und dem der zweiten Funkzelle (C2) zugeordneten Gewichtungsvektor ($W_{1,BS2}$, $W_{2,BS2}$, ...) an der Basisstation (BS) der zweiten Funkzelle (C2) ein gleiches Codewort zugeordnet wird.

3. Verfahren nach Anspruch 2, **dadurch gekennzeichnet, dass** das Downlink-Signals ferner von einer Basisstation wenigstens einer dritten Funkzelle ausgestrahlt wird, dass der Satz der Gewichtungsvektoren wenigstens einen Gewichtungsvektor umfasst, der einem Übertragungsweg der wenigstens einen dritten Funkzelle entspricht, und das diesem Gewichtungsvektor an der Basisstation der zugeordne= ten dritten Funkzelle das gleiche Codewort zugeordnet wird.

4. Verfahren nach Anspruch 1, 2 oder 3, **dadurch gekennzeichnet, dass** zum Festlegen des Satzes der Gewichtungsvektoren Gewichtungsvektoren ($W_{1,BS1}$, $W_{2,BS1}$, ...; $W_{1,BS2}$, $W_{2,BS2}$, ...) an der Mobilstation (MS) gemessen und in einer Reihenfolge an die Basisstationen (BS1, BS2) übertragen werden, wobei eine erste Gruppe von Plätzen der Reihenfolge der Übertragung von Gewichtungsvektoren ($W_{1,BS1}$, $W_{2,BS1}$, ...) vorbehalten ist, die einem Übertragungsweg der ersten Funkzelle (C1) entsprechen, und jeweils eine weitere Gruppe von Plätzen der Übertragung von Gewichtungsvektoren ($W_{1,BS2}$, $W_{2,BS2}$, ...) vorbehalten ist, die einem Übertragungsweg einer weiteren Funkzelle (C2) entsprechen.

5. Verfahren nach Anspruch 4, **dadurch gekennzeichnet, dass** die Teilnehmerstation eine Angabe über die Zahl der Gruppen an die Basisstationen überträgt.

6. Verfahren nach Anspruch 4 oder 5, **dadurch gekennzeichnet, dass** in der Reihenfolge die Plätze der verschiedenen Gruppen zyklisch aufeinanderfolgen.

7. Verfahren nach Anspruch 2 oder 3, **dadurch gekennzeichnet, dass** zum Festlegen des Satzes der Gewichtungsvektoren Gewichtungsvektoren ($W_{1,BS1}$, $W_{2,BS1}$, ... ; $W_{1,BS2}$, $W_{2,BS2}$, ...) an der Mobilstation (MS) gemessen und an die Basisstationen (BS1, BS2) jeweils in Verbindung mit einem Indikator übertragen werden, der die Funkzelle des Übertragungsweges bezeichnet, dem der übertragene Gewichtungsvektor entspricht.

8. Verfahren nach einem der Ansprüche 2 bis 7, **dadurch gekennzeichnet, dass** die zwei Basisstationen (BS1, BS2) zwei verschiedene Vorschriften für die Zuordnung eines Gewichtungsvektors zu einem von der Mobilstation übertragenen Codewort einsetzen.

9. Verfahren nach Anspruch 8, **dadurch gekennzeichnet, dass** jedem Codewort in den zwei Vorschriften jeweils ein einem Übertragungsweg der ersten Funkzelle entsprechender Gewichtungsvektor und ein einem Übertragungsweg der zweiten Funkzelle entsprechender Gewichtungsvektor zugeordnet ist.

10. Verfahren nach Anspruch 8 oder 9, **dadurch gekennzeichnet, dass** wenigstens eine der Basisstationen eine Vorschrift einsetzt, in der jedem Codewort ein anderer Gewichtungsvektor zugeordnet ist, und wenigstens eine andere eine Vorschrift einsetzt, bei der jedem Codewort der gleiche Gewichtungsvektor zugeordnet ist.

11. Verfahren nach Anspruch 8, 9 oder 10, **dadurch gekennzeichnet, dass** wenigstens eine der Basisstationen eine erste Vorschrift einsetzt, in der eine Mehrzahl von Codewörtern einem gleichen Gewichtungsvektor zugeordnet ist, und dass wenigstens eine andere Basisstation eine zweite Vorschrift einsetzt, in der der Mehrzahl von Codewörtern jeweils verschiedene Gewichtungsvektoren zugeordnet sind.

12. Verfahren nach Anspruch 11, **dadurch gekennzeichnet, dass** die Codewörter erste und zweite Bits umfassen, wobei die ersten Bits jeweils den von der einen Basisstation verwendeten Gewichtungsvektor und die zweiten Bits den von der zweiten Basisstation verwendeten Gewichtungsvektor spezifizieren.

13. Verfahren nach einem der vorhergehenden Ansprüche, **dadurch gekennzeichnet, dass** an der Mobilstation (MS) für jede Basisstation (BS1, BS2) eine Kovarianzmatrix berechnet und jeweils wenigstens ein Gewichtungsvektor unter den Eigenvektoren jeder Kovarianzmatrix festgelegt wird.

14. Verfahren nach einem der vorhergehenden Ansprüche, **dadurch gekennzeichnet, dass** es im Rahmen eines Soft Handover oder Softer Handover zwischen der ersten und der zweiten Funkzelle (C1, C2) eingesetzt wird.

15. Verfahren nach Anspruch 10, **dadurch gekennzeichnet, dass** der Satz von Gewichtungsvektoren zwei Vektoren umfasst, dass dasjenige Codewort an die Basisstationen übertragen wird, das an der Basisstation (BS1) der ersten Funkzelle (C1) dem der ersten Funkzelle zugeordneten Gewichtungsvektor entspricht und an der Basisstation (BS2) der zweiten Funkzelle (C2) dem der zweiten Funkzelle zugeordneten Gewichtungsvektor entspricht, und dass danach für die Dauer des Handover die Auswahl der von den Basisstationen verwendeten Gewichtungsvektoren nicht mehr verändert wird.

16. Verfahren nach Anspruch 10 oder 11, soweit auf Anspruch 4 rückbezogen, **dadurch gekennzeichnet, dass** die Basisstation (BS2) der zweiten Funkzelle nach Abschluss des Handovers die zweite Vorschrift weiterverwendet und dass im Falle eines weiteren Handovers zu einer dritten Funkzelle deren Basisstation wieder die erste Vorschrift verwendet.

17. Verfahren nach Anspruch 10 oder 11, soweit auf Anspruch 8 rückbezogen, **dadurch gekennzeichnet, dass** die Basisstation (BS2) der zweiten Funkzelle (C2) nach Abschluss des Handovers auf die Verwendung der ersten Vorschrift übergeht.

18. Basisstation (BS1, BS2) für ein Mobilfunk-Kommunikationssystem, die mehrere Antennen aufweist und eingerichtet ist, von einer Mobilstation (MS) ein Codewort zu empfangen und ein Downlink-Signal an die Mobilstation (MS) mit einem anhand des von der Mobilstation (MS) empfangenen Codewortes ausgewählten Gewichtungsvektor ($W_{1,BS1}$, ...) gewichtet auszustrahlen, **dadurch gekennzeichnet, dass** sie eingerichtet ist, eine Signalisierung einer von wenigstens zwei verschiedenen Vorschriften zum Auswählen des Gewichtungsvektors anhand des übertragenen Codewortes zu empfangen, von der Mobilstation (MS) die Gewichtungsvektoren zu empfangen und anhand des empfangenen Codewortes mittels der Vorschrift den Gewichtungsvektor auszuwählen.

19. Anordnung mit zumindest zwei Basisstationen (BS1, BS2) für ein Mobilfunk-Kommunikationssystem, wobei die Basisstationen (BS1, BS2) jeweils mehrere Antennen aufweisen und eingerichtet sind, von einer Mobilstation (MS) ein Codewort zu empfangen und ein Downlink-Signal an die Mobilstation (MS) mit einem anhand des von der Mobilstation (MS) empfangenen Codewortes ausgewählten Gewichtungsvektor ($W_{1,BS1}$, ...) gewichtet auszustrahlen, **dadurch gekennzeichnet, dass** die zumindest zwei Basisstationen (BS1, BS2) eingerichtet sind, unterschiedliche Vorschriften zum Auswählen des Gewichtungsvektors anhand des übertragenen Codewortes einzusetzen, wobei die Gewichtungsvektoren zumindest teilweise derart definiert sind, dass sie ein gleichzeitiges Aussenden von Downlink-Signalen über mehrere Antennen der Basisstationen (BS1, BS2) auslösen.

## Claims

1. Method for controlling the beamforming of a downlink signal which is transmitted to a mobile station (MS) in a mobile radio communication system from base stations (BS1, BS2) in a first and a second radio cell (C1, C2) with the base stations (BS1, BS2) having a plurality of antennas and being designed to transmit a downlink signal to the mobile station (MS), weighted with a weighting vector, having the following steps:

   - definition of a set of weighting vectors, with each weighting vector having at least one associated code word, at the mobile station (MS) and at the base stations (BS1, BS2) in the first and the second radio cell (C1, C2),
   - selection of an optimum weighting vector at the mobile station (MS), and transmission of the code word associated with the optimum weighting vector to the base stations (BS1, BS2),
   - transmission, weighted with the weighting vector associated with the code word, of the downlink signal to each base station (BS1, BS2),

   **characterized in that** the weighting vectors are associated with the code words in a different manner at the base stations (BS1, BS2) in the first and the second radio cell (C1, C2), such that these base stations weight the downlink signal with different weighting vectors on reception of an identical code word, with at least some of the weighting vectors being defined in such a manner that they initiate simultaneous transmission of downlink signals via a plurality of antennas of a base station.

2. Method according to Claim 1, **characterized in that** the set of weighting vectors is defined such that it in each case includes at least one weighting vector ($W_{1,BS1}$, $W_{2,BS1}$, ...) which corresponds to a transmission path in the first radio cell (C1), and one weighting vector ($W_{1,BS2}$, $W_{2,BS2}$, ...) which corresponds to a transmission path in the second radio cell (C2), and **in that** an identical code word is associated at the base station (BS1) in the first radio cell (C1) with the weighting vector ($W_{1,BS1}$, $W_{2,BS1}$, ...) which is associated with the first radio cell (C1), and with the weighting vector ($W_{1,BS2}$, $W_{2,BS2}$, ...) associated with the second radio cell (C2) at the base station (BS) in the second radio cell (C2).

3. Method according to Claim 2, **characterized in that** the downlink signal is also transmitted from a base station in at least one third radio cell, **in that** the set of weighting vectors includes at least one weighting vector which corresponds to a transmission path in the at least one third radio cell, and the same code word is associated with this weighting vector at the base station in the associated third radio cell.

4. Method according to Claim 1, 2, or 3, **characterized in that** weighting vectors ($W_{1,BS1}$, $W_{2,BS1}$, ...; $W_{1,BS2}$, $W_{2,BS2}$, ...) are measured at the mobile station (MS) in order to define the set of weighting vectors and are transmitted in series to the base stations (BS1, BS2), with a first group of spaces being reserved for the sequence of transmission of weighting vectors ($W_{1,BS1}$, $W_{2,BS1}$, ...) which correspond to a transmission path in the first radio cell (C1) and a further group of spaces in each case being reserved for transmission of weighting vectors ($W_{1,BS2}$, $W_{2,BS2}$, ...) which correspond to a transmission path in a further radio cell (C2).

5. Method according to Claim 4, **characterized in that** the subscriber station transmits an indication of the number of groups to the base stations.

6. Method according to Claim 4 or 5, **characterized in that** the spaces for the various groups follow one another cyclically in the sequence.

7. Method according to Claim 2 or 3, **characterized in that** weighting vectors ($W_{1,BS1}$, $W_{2,BS1}$, ...; $W_{1,BS2}$, $W_{2,BS2}$, ...) are measured at the mobile station (MS) in order to define the set of weighting vectors, and are in each case transmitted to the base stations (BS1, BS2) in conjunction with an indicator which indicates the radio cell of the transmission path with which the transmitted weighting vector corresponds.

8. Method according to one of Claims 2 to 7, **characterized in that** the two base stations (BS1, BS2) use two different rules for association of a weighting vector with a code word which is transmitted by the mobile station.

9. Method according to Claim 8, **characterized in that** each code word in the two rules in each case has one associated weighting vector, which corresponds to a transmission path in the first radio cell, and one associated weighting vector which corresponds to a transmission path in the second radio cell.

10. Method according to Claim 8 or 9, **characterized in that** at least one of the base stations uses a rule in which each code word has a different associated weighting vector, and at least one other uses a rule in which each code word has the same associated weighting vector.

11. Method according to Claim 8, 9 or 10, **characterized in that** at least one of the base stations uses a first rule in which a plurality of code words each have the same associated weighting vector, and **in that** at least one other base station uses a second rule, in which the plurality of code words each have different associated weighting vectors.

12. Method according to Claim 11, **characterized in that** the code words comprise first and second bits, with the first bits in each case specifying the weighting vector used by the first base station, and the second bits specifying the weighting vector used by the second base station.

13. Method according to one of the preceding claims, **characterized in that** a covariance matrix is calculated for each base station (BS1, BS2) at the mobile station (MS), and in each case at least one weighting vector is defined from the eigen vectors in each covariance matrix.

14. Method according to one of the preceding claims, **characterized in that** the method is used in the course of a soft handover or softer handover between the first and the second radio cell (C1, C2).

15. Method according to Claim 10, **characterized in that** the set of weighting vectors comprises two vectors, **in that** the code word which is transmitted to the base stations is that which corresponds to the weighting vector associated with the first radio cell at the base station (BS1) in the first radio cell (C1), and corresponds to the weighting vector associated with the second radio cell at the base station (BS2) in the second radio cell (C2), and **in that**, after this, the selection of the weighting vectors which are used by the base stations is not changed anymore for the duration of the handover.

16. Method according to Claim 10 or 11, to the extent that it or they refer back to Claim 4, **characterized in that** the base station (BS2) in the second radio cell continues to use the second rule after completion of the handover, and **in that**, in the event of a further handover to a third radio cell, its base station uses the first rule again.

17. Method according to Claim 10 or 11, to the extent that it or they refer back to Claim 8, **characterized in that** the base station (BS2) in the second radio cell (C2) changes to the use of the first rule after completion of the handover.

18. Base station (BS1, BS2) for a mobile radio communication system which has a plurality of antennas and is designed to receive a code word from a mobile station (MS) and to transmit a downlink signal to the mobile station (MS) weighted with a weighting vector ($W_{1,BS1}$, ...) selected on the basis of the code word received from the mobile station (MS) **characterized in that** the base station (BS1, BS2) is designed to receive signalling of one of at least two different rules for selection of the weighting vector on the basis of the transmitted code word, to receive the weighting vectors from the mobile station (MS), and to select the weighting vector by means of the rule on the basis of the received code word.

19. Arrangement having at least two base stations (BS1, BS2) for a mobile radio communication system, with the base stations (BS1, BS2) each having a plurality of antennas and being designed to receive a code word from a mobile station (MS) and to transmit a downlink signal to the mobile station (MS) weighted with a weighting vector ($W_{1,BS1}$, ...) selected on the basis of the code word received from the mobile station (MS), **characterized in that** the at least two base stations (BS1, BS2) are designed to use different rules for selection of the weighting vector on the basis of the transmitted code word, with at least some of the weighting vectors being defined in such a manner that they initiate simultaneous transmission of downlink signals via a plurality of antennas of the base stations (BS1, BS2).

**Revendications**

1. Procédé de commande de la mise en forme de faisceau d'un signal en liaison descendante qui est émis dans un système de radiocommunication mobile par des stations de base (BS1, BS2) d'une première et d'une deuxième cellule radio (C1, C2) vers une station mobile (MS), les stations de base (BS1, BS2) comportant plusieurs antennes et étant conçues pour émettre un signal en liaison descendante vers la station mobile (MS) avec une pondération spécifiée par un vecteur de pondération, avec les étapes suivantes:

- spécification d'un ensemble de vecteurs de pondération, au moins un mot de code étant associé à chaque vecteur de pondération, dans la station mobile (MS) et dans les stations de base (BS1, BS2) de la première et de la deuxième cellule radio (C1, C2),
- sélection d'un vecteur de pondération optimal dans la station mobile (MS) et transmission du mot de code associé au vecteur de pondération optimal aux stations de base (BS1, BS2),
- émission, pondérée avec le vecteur de pondération associé au mot de code, du signal en liaison descendante dans chaque station de base (BS1, BS2),

**caractérisé par le fait que**, dans les stations de base (BS1, BS2) de la première et de la deuxième cellule radio (C1, C2), les vecteurs de pondération sont associés aux mots de code de différentes manières de telle sorte que, lors de la réception d'un même mot de code, ces stations de base pondèrent le signal en liaison descendante avec des vecteurs de pondération différents, les vecteurs de pondération étant définis au moins en partie de telle sorte qu'ils déclenchent une émission simultanée de signaux en liaison descendante par l'intermédiaire de plusieurs antennes d'une station de base.

2. Procédé selon la revendication 1, **caractérisé par le fait que** l'ensemble des vecteurs de pondération est spécifié de telle sorte qu'il contient au moins un vecteur de pondération ($W_{1,BS1}$, $W_{2,BS1}$, ...) correspondant à une voie de transmission de la première cellule radio (C1) et un vecteur de pondération ($W_{1,BS2}$, $W_{2,BS2}$, ...) correspondant à une voie de transmission de la deuxième cellule radio (C2) et qu'un même mot de code est associé au vecteur de pondération ($W_{1,BS1}$, $W_{2,BS1}$, ...) associé à la première cellule radio (C1) dans la station de base (BS1) de la première cellule radio (C1) et au vecteur de pondération ($W_{1,BS2}$, $W_{2,BS2}$, ...) associé à la deuxième cellule radio (C2) dans la station de base (BS) de la deuxième cellule radio (C2).

3. Procédé selon la revendication 2, **caractérisé par le fait que** le signal en liaison descendante est émis en plus par une station de base au moins d'une troisième cellule radio, que l'ensemble des vecteurs de pondération comprend au moins un vecteur de pondération qui correspond à une voie de transmission de la troisième cellule radio ou des troisièmes cellules radio et que le même mot de code est associé à ce vecteur de pondération dans la station de base de la troisième cellule radio associée.

4. Procédé selon la revendication 1, 2 ou 3, **caractérisé par le fait que**, pour la spécification de l'ensemble des vecteurs de pondération, on mesure des vecteurs de pondération ($W_{1,BS1}$, $W_{2,BS1}$, ...; $W_{1,BS2}$, $W_{2,BS2}$, ...) dans la station mobile (MS) et on les transmet dans une séquence aux stations de base (BS1, BS2), un premier groupe d'emplacements de la séquence étant réservé à la transmission de vecteurs de pondération ($W_{1,BS1}$, $W_{2,BS1}$, ...) qui correspondent à une voie de transmission de la première cellule radio (C1) et un autre groupe d'emplacements étant réservé à la transmission de vecteurs de pondération ($W_{1,BS2}$, $W_{2,BS2}$, ...) qui correspondent à une voie de transmission d'une autre cellule radio (C2).

5. Procédé selon la revendication 4, **caractérisé par le fait que** la station d'abonné transmet aux stations de base une indication sur le nombre des groupes.

6. Procédé selon la revendication 4 ou 5, **caractérisé par le fait que**, dans la séquence, les emplacements des différents groupes se succèdent de façon cyclique.

7. Procédé selon la revendication 2 ou 3, **caractérisé par le fait que**, pour la spécification de l'ensemble des vecteurs de pondération, on mesure des vecteurs de pondération ($W_{1,BS1}$, $W_{2,BS1}$, ... ; $W_{1,BS2}$, $W_{2,BS2}$, ...) dans la station mobile (MS) et on les transmet aux stations de base (BS1, BS2) à chaque fois en relation avec un indicateur qui désigne la cellule radio de la voie de transmission à laquelle le vecteur de pondération transmis correspond.

8. Procédé selon l'une des revendications 2 à 7, **caractérisé par le fait que** les deux stations de base (BS1, BS2) utilisent deux règles différentes pour l'association d'un vecteur de pondération à un mot de code transmis par la station mobile.

9. Procédé selon la revendication 8, **caractérisé par le fait qu'**il est associé à chaque mot de code dans les deux règles à chaque fois un vecteur de pondération correspondant à une voie de transmission de la première cellule radio et un vecteur de pondération correspondant à une voie de transmission de la deuxième cellule radio.

10. Procédé selon la revendication 8 ou 9, **caractérisé par le fait qu'**au moins l'une des stations de base utilise une règle telle qu'un vecteur de pondération différent est associé à chaque mot de code et qu'au moins une autre station de base utilise une règle telle que le même vecteur de pondération est associé à chaque mot de code.

11. Procédé selon la revendication 8, 9 ou 10, **caractérisé par le fait qu'**au moins l'une des stations de base utilise une première règle telle que plusieurs mots de code sont associés à un même vecteur de pondération et qu'au moins une autre station de base utilise une deuxième règle telle que plusieurs mots de code sont associés à chaque fois à différents vecteurs de pondération.

12. Procédé selon la revendication 11, **caractérisé par le fait que** les mots de code comprennent des premiers et deuxièmes bits, les premiers bits spécifiant respectivement le vecteur de pondération utilisé par une première station de base et les deuxièmes bits spécifiant le vecteur de pondération utilisé par la deuxième station de base.

**13.** Procédé selon l'une des revendications précédentes, **caractérisé par le fait que**, dans la station mobile (MS), une matrice de covariance est calculée pour chaque station de base (BS1, BS2) et à chaque fois au moins un vecteur de pondération est spécifié parmi les vecteurs propres de chaque matrice de covariance.

**14.** Procédé selon l'une des revendications précédentes, **caractérisé par le fait qu'**il est utilisé dans le cadre de transferts sans coupure, à savoir Soft Handover ou Softer Handover, entre la première et la deuxième cellule radio (C1, C2).

**15.** Procédé selon la revendication 10, **caractérisé par le fait que** l'ensemble de vecteurs de pondération comprend deux vecteurs, que le mot de code qui correspond dans la station de base (BS1) de la première cellule radio (C1) au vecteur de pondération associé à la première cellule et le mot de code qui correspond dans la station de base (BS2) de la deuxième cellule radio (C2) au vecteur de pondération associé à la deuxième cellule sont transmis aux stations de base et que la sélection des vecteurs de pondération utilisés par les stations de base n'est plus modifiée ensuite pour toute la durée du Handover.

**16.** Procédé selon la revendication 10 ou 11 dans la mesure où celle-ci se rapporte à la revendication 4, **caractérisé par le fait que** la station de base (BS2) de la deuxième cellule radio continue à utiliser la deuxième règle après la fin du Handover et que, dans le cas d'un nouvel Handover vers une troisième cellule radio, la station de base de celle-ci utilise à nouveau la première règle.

**17.** Procédé selon la revendication 10 ou 11 dans la mesure où celle-ci se rapporte à la revendication 8, **caractérisé par le fait que** la station de base (BS2) de la deuxième cellule radio (C2) passe à l'utilisation de la première règle après la fin du Handover.

**18.** Station de base (BS1, BS2) pour un système de radiocommunication mobile, laquelle comporte plusieurs antennes et est conçue pour recevoir un mot de code d'une station mobile (MS) et pour émettre un signal en liaison descendante vers la station mobile (MS) avec une pondération spécifiée par un vecteur de pondération ($W_{1,BS1}$, ...) sélectionné à l'aide du mot de code reçu de la station mobile (MS), **caractérisée par le fait qu'**elle est conçue pour recevoir une signalisation d'une règle parmi au moins deux règles différentes en vue de la sélection du vecteur de pondération à l'aide du mot de code transmis, pour recevoir les vecteurs de pondération de la station mobile (MS) et pour sélectionner le vecteur de pondération à l'aide du mot de code reçu et au moyen de la règle.

**19.** Dispositif comportant au moins deux stations de base (BS1, BS2) pour un système de radiocommunication mobile, les stations de base (BS1, BS2) comportant chacune plusieurs antennes et étant conçues pour recevoir un mot de code d'une station mobile (MS) et pour émettre un signal en liaison descendante vers la station mobile (MS) avec une pondération spécifiée par un vecteur de pondération ($W_{1,BS1}$, ...) sélectionné à l'aide du mot de code reçu de la station mobile (MS), **caractérisé par le fait que** les deux ou plus stations de base (BS1, BS2) sont conçues pour utiliser différentes règles en vue de la sélection du vecteur de pondération à l'aide du mot de code transmis, les vecteurs de pondération étant définis au moins en partie de telle sorte qu'ils déclenchent une émission simultanée de signaux en liaison descendante par l'intermédiaire de plusieurs antennes des stations de base (BS1, BS2).

# FIG 1

# FIG 2

# FIG 3

# FIG 4

$$(W_{1,BS1}, W_{1,BS2}, W_{2,BS1}, W_{2,BS2}....)$$

# FIG 5

$$(W_{1,BS1}, W_{1,BS2}, W_{2,BS1}, W_{2,BS2})$$

MS

BS2

xx00 $W_{1,BS1}$
xx01 $W_{1,BS2}$
xx10 $W_{2,BS1}$
xx11 $W_{2,BS2}$

BS1

00xx $W_{1,BS1}$
01xx $W_{1,BS2}$
10xx $W_{2,BS1}$
11xx $W_{2,BS2}$

# FIG 6

$$(BS1{:}W_{1,BS1}, BS2{:}W_{1,BS2}, BS1{:}W_{2,BS1}, BS3{:}W_{2,BS3})$$

MS

BS3

0 $W_{1,BS3}$
1 $W_{1,BS3}$
2 ....

BS2

0 $W_{1,BS2}$
1 $W_{1,BS2}$
2 .....

BS1

0 $W_{1,BS1}$
1 $W_{1,BS2}$
2 $W_{2,BS1}$
3 $W_{1,BS3}$

**IN DER BESCHREIBUNG AUFGEFÜHRTE DOKUMENTE**

**In der Beschreibung aufgeführte Patentdokumente**

- WO 9956407 A2
- WO 0072464 A1